(19) Europäisches Patentamt
European Patent Office
Office européen des brevets

(11) Veröffentlichungsnummer: **0 466 066 B1**

(12) **EUROPÄISCHE PATENTSCHRIFT**

(45) Veröffentlichungstag der Patentschrift: **06.09.95**

(51) Int. Cl.[6]: **C07F 7/18**, C08K 5/54, C09C 1/00, //C07F7/08

(21) Anmeldenummer: **91111319.9**

(22) Anmeldetag: **08.07.91**

# (54) Verfahren zur Herstellung von Oligo-(4-(2-organo-organooxysilylalkyl)cyclohexan-1,2-diyl)bis-oligosulfiden.

(30) Priorität: **13.07.90 DD 342751**

(43) Veröffentlichungstag der Anmeldung:
**15.01.92 Patentblatt 92/03**

(45) Bekanntmachung des Hinweises auf die Patenterteilung:
**06.09.95 Patentblatt 95/36**

(84) Benannte Vertragsstaaten:
**AT BE DE ES FR GB IT NL SE**

(56) Entgegenhaltungen:
**EP-A- 0 124 654**
**DD-A- 262 231**
**DD-A- 263 065**
**US-A- 4 100 172**

(73) Patentinhaber: **CHEMIEWERK NÜNCHRITZ GmbH**
**Friedrich-von-Heyden-Platz 1**
**D-01612 Nünchritz (DE)**

(72) Erfinder: **Dittrich, Uwe, Dr. rer. nat. Dipl.-Chem.**
**George-Bähr-Strasse 20**
**O-8027 Dresden (DE)**
Erfinder: **Dathe, Siegrid, Dr. rer. nat. Dipl.-Chem.**
**Caspar-David-Friedrich-Strasse 9b**
**O-8020 Dresden (DE)**
Erfinder: **Raabe, Hartmut, Dipl.-Chem.**
**Uthmannstrasse 5**
**O-5800 Gotha (DE)**
Erfinder: **Sourisseau, Rolf, Dr. rer. nat. Dipl.-Chem.**
**Eschleber Strasse 60**
**O-5800 Gotha (DE)**
Erfinder: **Rühlmann, Klaus, Prof. Dr. rer. nat. Dipl.-Chem.**
**Senftenberger Strasse 20**
**O-8036 Dresden (DE)**

(74) Vertreter: **Zöllner, Gudrun**
**Chemiewerk Nünchritz GmbH,**
**Friedrich-von-Heyden-Platz 1**
**D-01612 Nünchritz (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein neues einfaches Verfahren zur Herstellung von Oligo(4-(2-organo-organooxysilylalkyl)cyclohexan-1,2-diyl)bis-oligosulfiden. Sie sind als Silanhaftmittel oder als Verstärkungsadditive in silikatisch gefüllen Kautschukmischungen, unter anderen für Laufflächen und Karkassen von Fahrzeugreifen, verwendbar. Im weiteren können schwefelhaltige Silanhaftmittel bei der Herstellung von Dichtungsmassen, Gießformen für den Metallguß, Farb- und Schutzanstrichen, Klebstoffen, Asphaltmischungen und silikatisch gefüllten Kunststoffen eingesetzt werden. Schließlich ergeben sich Anwendungsmöglichkeiten bei der Fixierung von funktionellen Gruppen und Wirkstoffen auf anorganischen Trägern, z. B. bei der Immobilisierung von Enzymen, bei der Herstellung von Festbettkatalysatoren und bei der Flüssigkeitschromatographie.

Die Herstellung von schwefelhaltigen Organosiliciumverbindungen ist mit verschiedenen Verfahren möglich. So ist bekannt, Bis(organo-organooxysilyl)oligosulfide, vorzugsweise Bis(alkyl-organooxysilyl)-oligosulfide bzw. Mercaptoalkylalkoxysilane durch Umsetzung von Halogenalkyltrialkoxysilanen, insbesondere von Halogenpropyltrialkoxysilanen und $Met_2S_x$ bzw. MetSH (Met = $NH_4$, Na, K; x = 1 bis 6) herzustellen (DE 2 141 159, DE 2 212 239, US 3 978 103, US 4 048 206). Das Polysulfid $Met_2S_x$ kann dabei auch in situ aus MetOR (R = Alkyl, Cycloalkyl), MetSH und S erzeugt werden (DE 2 542 534, DE 2 712 965, DE 3 311 340).

Weiterhin ist die Herstellung von Bis(4(2-trialkoxysilylethyl)cyclohexan-1,2-diyl)-oligosulfiden durch Umsetzung von 4-(2-trialkoxysilylethyl)cyclohexylhalogeniden mit $Na_2Sx$ (DD -A-262231) und die Herstellung von Bis[($\beta$-trialkoxysilylethyl)benzyl]oligosulfiden durch Umsetzung von $\beta$-Trialkoxysilylethylbenzylhalogeniden mit NaHS und S bekannt (DE 3 504 241). Auch die Umsetzung von Halogenalkylalkoxysilan mit S und $H_2S$ in Gegenwart eines Amine oder $NH_3$ an Alkoxysilylalkylpolysulfiden ist beschrieben worden, (DE 2 648 241).

Weiterhin werden Mercaptoalkylalkoxysilane vorzugsweise Mercaptopropylalkoxysilane zu Bis(organo-organooxysilyl) oligosulfiden, vorzugsweise zu Bis(propyl-organooxysilyl) oligosulfiden umgesetzt. Gemäß DE 2 141 160 wird dazu $S_zHal_2$ (z = 1 bis 3, Hal = Cl,Br) oder gemäß DE 2 405 758 Schwefel verwendet.

Bei den angeführten Verfahren ist es nachteilig, daß spezielle Sulfidierungsagenzien, z. B. Poly = oder Hydrogensulfide bzw. Schwefelhalogenide benötigt werden. Außerdem fallen unerwünschte Reaktionsprodukte wie Metallhalogenide oder Halogenwasserstoffe an, die in einer zusätzlichen Verfahrensstufe abgetrennt werden müssen. Der Einsatz von Mercaptosilanen macht eine vorausgehende, zusätzliche, aufwendige Verfahrensstufe erforderlich.

Die angeführten Nachteile entfallen bei der Umsetzung von Vinylsilanen mit S bzw. einem Gemisch aus S und $H_2S$ zu Bis(Silylethyl)-oligosulfiden gemäß DE 2 056 229. Die bei 100 bis 200 °C durchgeführte Reaktion führt jedoch nur bei Arbeiten unter erhöhtem Druck und in Gegenwart eines Sulfidierungskatalysators zu den gewünschten Produkten. Die dabei zwangsläufig in einer Nebenreaktion entstehenden freien Mercaptogruppen bewirken aber bekanntermaßen eine starke Verkürzung der An- und Ausvulkanisationszeiten. Dies führt neben einer verringerten Produktionssicherheit zu einer ungenügenden Durchmischung der Bestandteile des Vulkanisats und letztendlich zu einer Verschlechterung der physikalisch-mechanischen Kautschukparameter.

Ziel der Erfindung ist ein technisch leicht durchführbares Verfahren zur Herstellung von Oligo(4-(2-organo-organooxysilylalkyl)cyclohexan-1,2-diyl)bis-oligosulfiden aus den technisch anfallenden Produkten der 4-(2-Organo-organooxysilylalkyl) cyclohex-1-en-Synthese, welches ohne Anwendung von Druck und ohne Einsatz spezieller Sulfidierungskatalysatoren durchführbar ist. Weiterhin lag die Aufgabe zugrunde, von den bei der 4-(2-Organo-organooxysilylalkyl)cyclohex-1-en-Synthese anfallenden Produkten auszugehen, wobei darin enthaltene SiCl-haltige Bestandteile die Umsetzung nicht stören. Die hergestellten Verbindungen sollen als Silanhaftmittel oder als Verstärkungsadditive in silicatisch gefüllten Kautschukmischungen einsetzbar sein.

Erfindungsgemäß wird die Aufgabe dadurch gelöst, daß ein Organosilan der allgemeinen Formel

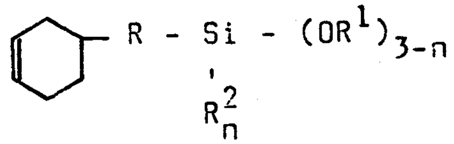

I.

welches ein Organochlorsilan der allgemeinen Formel

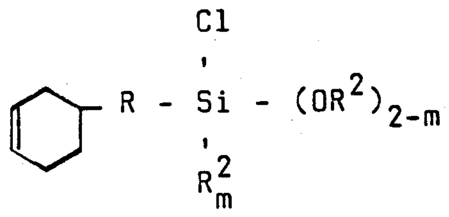

II.

wobei R und $R^2$ unabhängig voneinander jeweils $C_1$- bis $C_6$-Alkyl, $R^1$ = Alkyl, Cycloalkyl, Aryl, n = 1 bis 3 und m = 1 oder 2 bedeuten, im Molverhältnis 1000 : 1 bis 10 : 1 enthält, mit Schwefel oder einem Gemisch aus Schwefelwasserstoff und Schwefel in den Molverhältnissen R : Schwefel bzw. Schwefelwasserstoff = 1 : 1 bis 1 : 5 bei Temperaturen oberhalb 150 °C, bevorzugt bei Temperaturen zwischen 150 °C bis 200 °C, direkt umgesetzt wird. Das Molverhältnis von I zu II beträgt vorzugsweise 1000 : 1 bis 100 : 1. Bei Einsatz eines Gemisches aus Schwefel und Schwefelwasserstoff liegt der Masseanteil des Schwefels vorzugsweise zwischen $10^{-2}$ und $10^{-1}$ kg/kg, bezogen auf eingesetztes Silan.

Die erfindungsgemäß hergestellten Oligo(4-(2-organo-organooxysilylalkyl)cyclohexan-1,2-diyl)bis-oligosulfide haben die allgemeine Formel

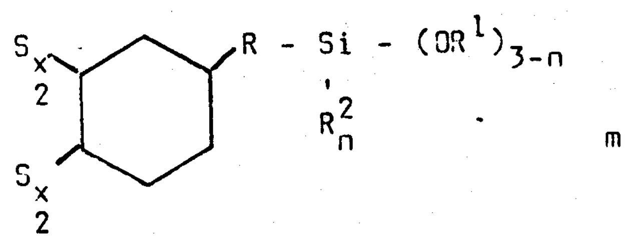

III

wobei R und $R^2$ unabhängig voneinander jeweils $C_1$- bis $C_6$-Alkyl, $R^1$ = Alkyl, Cycloalkyl, Aryl, n = 1 bis 3 und m = x größer oder gleich 1 ist, und werden als klare, ölige, gelb bis tiefrot gefärbte Flüssigkeiten erhalten. Sie sind in trockenen, organischen Lösungsmitteln, wie z. B. Ethanol oder N,N-Dimethylformamid in jedem Verhältnis unzersetzt löslich. Ohne nachfolgende Reinigungsoperationen können sie sofort für alle Anwendungszwecke eingesetzt werden. Aufgrund ihres hohen Schwefelgehaltes bzw. einer großen Anzahl potentieller Verknüpfungsstellen im Molekül sind sie ausgezeichnete Silanhaftmittel oder Verstärkungsadditive in silicatisch gefüllten Kautschukmischungen.

Überraschenderweise ist es erfindungsgemäß gelungen, Oligo(4-(2-organo-organooxysilylalkyl)-cyclohexan-1,2-diyl)bis-oligosulfide ohne erhöhten Druck und ohne Anwendung von Sulfidierungskatalysatoren problemlos herzustellen.

Ausführungsbeispiele

In einem 250 ml-Dreihalskolben mit Rührer, Innenthermometer, Rückflußkühler, Trockenrohr und angeschlossenem Kondensator für entstehende Gase (Kühlfalle - Trockeneis/Aceton) werden jeweils 100 g (0,367 Mol) 4(2-Triethoxysilylethyl)cyclohex-1-en mit einem Gehalt an 4(2-Chlordiethoxysilylethyl)cyclohex-1-en von 0,1 - 5 g (Molverhältnis 965 : 1 bis 19,3 : 1) und Schwefelpulver bei 433 bis 443 K zur Reaktion gebracht.

Nach Ablauf der Reaktionszeit hat sich der Schwefel vollständig unter Bildung der gewünschten Oligo-(4-(2-triethoxysilylethyl)cyclohexan-1,2-diyl)bis-oligosulfide gelöst. Das Reaktionsprodukt ist eine klare, ölige, gefärbte Flüssigkeit, die in trockenen organischen Lösungsmitteln wie Ethanol, Aceton oder N,N-Dimethylformamid in jedem Verhältnis löslich ist. Gegebenenfalls wird von geringen Mengen bei der Lösung in trockenen organischen Lösungsmitteln ausfallenden Schwefels abgesaugt. Die Struktur der erhaltenen Oligosulfide wurde mit Hilfe der $^{13}C$-NMR-Spektroskopie und der Hochdruckflüssigkeitschromatographie nachgewiesen, (Bild 1 und 2).

Die Ausgangssubstanzen, Reaktionszeiten sowie Parameter der Reaktionsprodukte sind für die Beispiele 1 - 7 in Tabelle 1 dargelegt.

Die erhaltenen Oligo(4-(2-triethoxysilylethyl)cyclohexan-1,2-diyl)bis-oligosulfide werden in einer kieselsäuregefüllten Styren- Butadien- Kautschukmischung auf ihre Wirksamkeit als S-haltige Silanhaftmittel für silicatisch gefüllte, vulkanisierbare Kautschuke getestet.

Die Zusammensetzung der SBR-Mischung ist in Tabelle 2 wiedergegeben und die erhaltenen dynamischen und physikalisch-mechanischen Parameter der Vulkanisate mit den erfindungsgemäßen Produkten nach Beispiel 1, 4 und 7 gegen die entsprechende Nullmischung, werden in Tabelle 3 gezeigt.

Tabelle 1

| Beispiel Nr.: | | 1 | 2 | 3 | 4 | 5 | 6 | 7 |
|---|---|---|---|---|---|---|---|---|
| 4(2-Triethoxysilyl-ethyl)cyclohex-1-en | in g | 100 | 100 | 100 | 100 | 100 | 100 | 100 |
| | in Mol | 0,367 | 0,367 | 0,367 | 0,367 | 0,367 | 0,367 | 0,367 |
| Gehalt an 4(2-Chlor-diethoxysilylethyl) cyclohex-1-en | in g | 0,1 | 0,1 | 0,5 | 1 | 3 | 5 | 0,15 |
| | in Mol | 0,0004 | 0,0004 | 0,002 | 0,004 | 0,012 | 0,02 | 0,0006 |
| Schwefel | in g | 23,5 | 35,3 | 35,3 | 35,3 | 35,3 | 35,3 | 47,1 |
| | in Mol | 0,734 | 1,1 | 1,1 | 1,1 | 1,1 | 1,1 | 1,468 |
| Reaktionszeit | in h | 2 | 3 | 3 | 3 | 3 | 3 | 3,5 |
| Ausbeute | in % d.Th. | 99,6 | 92,9 | 98,1 | 99,5 | 99,6 | 99,6 | 95,4 |
| Analysendaten in $10^{-2}$ kg/kg | C gefunden | 50,17 | 49,10 | 46,47 | 45,84 | 45,79 | 45,80 | 43,99 |
| | berechnet | 49,97 | 45,61 | 45,61 | 45,61 | 45,61 | 45,61 | 41,96 |
| | H gefunden | 8,42 | 8,24 | 7,80 | 7,70 | 7,69 | 7,71 | 7,38 |
| | berechnet | 8,38 | 7,65 | 7,65 | 7,65 | 7,65 | 7,65 | 7,04 |
| | S gefunden | 18.70 | 20,44 | 24,70 | 25,70 | 25,01 | 25,80 | 28,72 |
| | berechnet | 19,05 | 26,09 | 26,09 | 26,09 | 26,09 | 26,09 | 32,00 |
| | Cl gefunden | 0,01 | 0,01 | 0,05 | 0,11 | 0,34 | 0,61 | 0,02 |
| | berechnet | 0,013 | 0,013 | 0,065 | 0,13 | 0,39 | 0,65 | 0,023 |
| Farbe des Produktes | | gelb | gelb-orange | gelb-orange | gelb-orange | gelb-orange | gelb-orange | orange-rot |

Tabelle 2

Zusammensetzung der kieselsäuregefüllten SBR-Testmischung

| Bestandteile in pHR Gewichtsteile auf 100 Teile Kautschuk | Nullmischung | Testmischungen 1, 2, 3 |
|---|---|---|
| Buna SB 152 H (Styren-Butadien-kautschuk | 100 | 100 |
| Füllstoff K 605 (Kieselsäure, pH 7,6 - 8,4) | 40 | 40 |
| Weichmacher SE (Parafinöl) | 10 | 10 |
| Zinkweiß WS (ZnO) | 5 | 5 |
| Stearinsäure | 2 | 2 |
| Alterungsschutzmittel MB (2-Methyl-benzimidazol) | 1 | 1 |
| Kreide (inaktiver Füllstoff) | 5 | 2 |
| Sulfenax CB 30 (N-Cyclohexyl-2-benzothiazyl-sulfenamid) | 1,5 | 1,5 |
| Wobazid Thiuram OS (Ultrabeschleu-niger-Tetramethylthiuramidisulfid) | 0,3 | 0,3 |
| Schwefeldispersion T | 2,5 | 2,5 |
| Testsubstanz (erfindungsgemäße Silane entsprechend den Beisp. 1, 4, 7) | - | 3 |
| Summe | 167,3 | 167,3 |

Tabelle 3

Dynamische und physikalisch-mechanische Kennwerte der erzeugten Vulkanisate

| Kautschuk techn. Kennwert | | Null-mischung | Testmischungen mit dem Silan entsprechend Beispiel 1 | Beispiel 4 | Beispiel 7 |
|---|---|---|---|---|---|
| $M_L$ | (RE) | 14,8 | 13,3 | 13,2 | 13,0 |
| $t_2$ | (min:sec) | 9:22 | 8:09 | 7:23 | 6:33 |
| $t_{90}$ | (min:sec) | 32:05 | 18:08 | 15:42 | 17:24 |
| $M_{HR}$ | (RE) | 70,0 | 71,6 | 74,5 | 74,6 |
| M 100 | (MPa) | 2,09 | 2,75 | 2,81 | 3,72 |
| n.A. | " | 2,64 | 3,94 | 4,60 | 5,17 |
| M 200 | " | 3,70 | 5,60 | 5,68 | 7,04 |
| n.A. | " | 4,44 | 8,09 | 8,56 | 9,04 |
| M 300 | " | 5,19 | 8,31 | 8,35 | 9,71 |
| n.A. | " | 6,77 | 11,05 | 11,62 | - |
| F | " | 11,21 | 11,47 | 12,07 | 11,09 |
| n.A. | " | 10,60 | 10,62 | 11,56 | - |
| ZGF | (%) | 5,4 | 9,1 | 10,7 | 12,1 |
| D | (%) | 490 | 392 | 341 | 298 |
| n.A. | (%) | 407 | 243 | 258 | 196 |
| bl.D. | (%) | 16 | 9 | 9 | 9 |
| H | (ShA) | 52 | 54 | 56 | 56 |
| E. | (%) | 36 | 30 | 39 | 40 |
| RdV | (%) | 62,5 | 51,9 | 53,5 | 49,7 |

Bedeutung der Abkürzungen

| | | |
|---|---|---|
| $M_L$ | = | Monneyviskosität |
| RE | = | Rheometer-Einheiten |
| $t_2$ | = | Scorchzeit (Drehmoment bei 90 % der Vulkanisationszeit) |
| $t_{90}$ | = | Scorchzeit (Drehmoment bei 90 %iger Vulkanisation) |
| $M_{HR}$ | = | 90 % des max. Drehmomentes der ausvulkanisierten Mischung |
| $M_n$ | = | Modul n (Gegenkraft bei n %iger Dehnung) n = 100, 200, 300 |
| n.A. | = | nach Alterung (7d/70 °C) |

F = Festigkeit bei Dehnung bis zum Bruch
ZGF = Zugfestigkeit (Maß für die Festigkeit bei Alterung)
D = Dehnung bei Bruch in %
H = Härte
E = Rückprallelastizität
RdV = Druckverformungsrest

Die erfindungsgemäß erzeugten Oligo-(4-(2-triethoxysilylethyl)cyclohexan-1,2-diyl)bis-oligosulfide bewirken in der kieselsauregefüllten SBR-Mischung eine Senkung der Monneyviskosität $M_L$ und eine Verkürzung der An- und Ausvulkanisationszeiten ($t_2$, $t_{90}$), ohne aber die kautschuktechnologische Sicherheitsgrenze von 5 min. zu unterschreiten.

Demgegenüber werden aber nahezu alle physikalisch-mechanischen Parameter der erhaltenen Vulkanisate, verglichen mit der Nullmischung, verbessert. Dies bedeutet eine Erhöhung der Leistungsfähigkeit der erhaltenen Gummiprodukte für alle Verwendungsmöglichkeiten.

## Patentansprüche

1. Verfahren zur Herstellung von Oligo(4-(2-organo-organooxysilylalkyl)cyclohexan-1,2-diyl)bis-oligosulfiden aus technisch anfallenden Produkten der 4-(2-Organo-organooxysilylalkyl)cyclohex-1-en-Synthese, ohne Einsatz von Katalysator und bei Normaldruck, dadurch gekennzeichnet, daß ein Organosilan der allgemeinen Formel

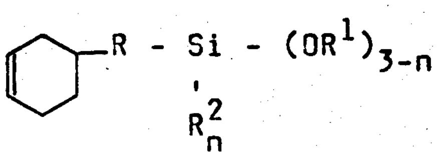

I.

welches ein Organochlorsilan der allgemeinen Formel

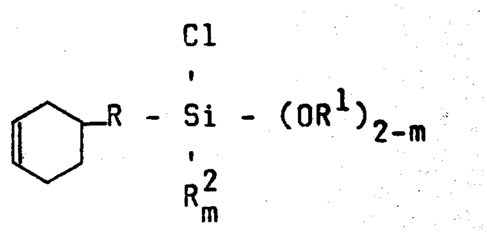

II.

wobei R und $R^2$ unabhängig voneinander jeweils $C_1$- bis $C_6$- Alkyl, $R^1$ = Alkyl, Cycloalkyl, Aryl, n = 1 bis 3 und m = 1 oder 2 bedeuten, im Molverhältnis 1000 : 1 bis 10 : 1 enthält, mit Schwefel oder einem Gemisch aus Schwefelwasserstoff und Schwefel in den Molverhältnissen R : Schwefel bzw. Schwefelwasserstoff = 1 : 1 bis 1 : 5 bei Temperaturen oberhalb 150 °C direkt umgesetzt wird.

2. Verfahren gemaß Anspruch 1, dadurch gekennzeichnet, daß die Umsetzung im Temperaturbereich von 150 °C bis 200 °C erfolgt.

3. Verfahren gemäß Anspruch 1 und 2, dadurch gekennzeichnet, daß das Molverhältnis von I zu II 1000 : 1 bis 100 : 1 beträgt.

4. Verfahren gemäß Anspruch 1 bis 3, dadurch gekennzeichnet, daß bei Zugabe eines Gemisches von Schwefelwasserstoff und Schwefel der Masseanteil des Schwefels im Bereich von $10^{-2}$ bis $10^{-1}$ kg/kg bezogen auf eingesetztes Silan liegt.

## Claims

1. Process for the preparation of oligo(4-(2-organo-organooxysilylalkyl)cyclohexane-1,2-diyl)bis-oligosulfides from products formed in industry in the 4-(2-organo-organooxysilylalkyl)cyclohex-1-ene synthesis, without use of a catalyst and at atmospheric pressure, characterized in that an organosilane of the

general formula

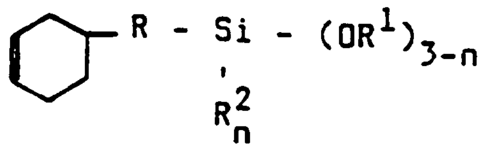

I.

which contains, in a molar ratio of from 1,000:1 to 10:1, an organochlorosilane of the general formula

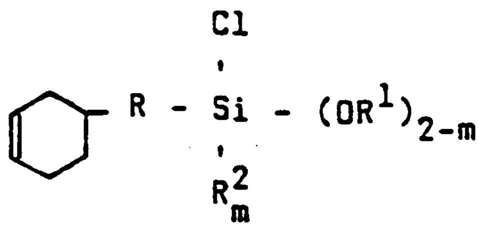

II.

where R and $R^2$ are each, independently of one another, $C_1$- to $C_6$-alkyl, $R^1$ = alkyl, cycloalkyl, aryl, n = from 1 to 3 and m = 1 or 2, is reacted directly with sulfur or a mixture of hydrogen sulfide and sulfur in a molar ratio R: sulfur or hydrogen sulfide = from 1:1 to 1:5 at temperatures above 150 °C.

2. Process according to Claim 1, characterized in that the reaction is carried out in the temperature range from 150 °C to 200 °C.

3. Process according to Claim 1 or 2, characterized in that the molar ratio of I to II is from 1,000:1 to 100:1.

4. Process according to any of Claims 1 to 3, characterized in that on addition of a mixture of hydrogen sulfide and sulfur, the proportion by mass of the sulfur is in the range from $10^{-2}$ to $10^{-1}$ kg/kg, based on silane used.

**Revendications**

1. Procédé pour la préparation de oligo(4-(2-organo-organooxysilylalkyl)cyclohexane-1,2-diyl)bis-oligosulfures résultants techniquement des produits de la synthèse de 4-(2-organo-organooxysilylalkyl)-cyclohex-1-ène sans utiliser de catalyseur et sous pression normale, caractérisé par le fait qu'un organosilane ayant la formule générale

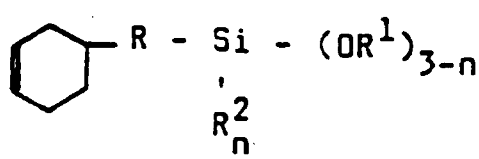

I.

lequel contient un silane organochloré ayant la formule générale

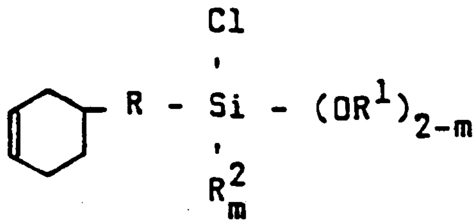

II.

où R et $R^2$ signifient, indépendamment l'un de l'autre, alkyle de $C_1$ à $C_6$, $R^1$ = alkyle, cycloalkyle, aryle, n = de 1 à 3 et m = 1 ou 2, ayant pour un rapport molaire entre 1000 : 1 et 10 : 1, est directement transformé avec du soufre ou un mélange d'hydrogène sulfuré et de soufre pour des rapports molaires R : soufre ou hydrogène sulfuré = 1 : 1 jusqu'à 1 : 5 à des températures supérieures à 150 ° C.

**2.** Procédé selon la revendication 1, caractérisé par le fait que la transformation s'effectue à des températures se situant entre 150 ° C et 200 ° C.

**3.** Procédé selon les revendications 1 et 2, caractérisé par le fait que le rapport molaire entre I et II est de 1000 : 1 à 100 : 1.

**4.** Procédé selon les revendications 1 à 3, caractérisé par le fait que, lorsqu'un mélange d'hydrogène sulfuré et de soufre est ajouté, le rapport de masse du soufre se situe entre $10^{-2}$ et $10^{-1}$ kg/kg par rapport au silane employé.

Bild 1: $^{13}$C-NMR-Spektrum (APT) des erfindungsgemäßen S-haltigen Silans entsprechend Ausführungsbeispiel 1

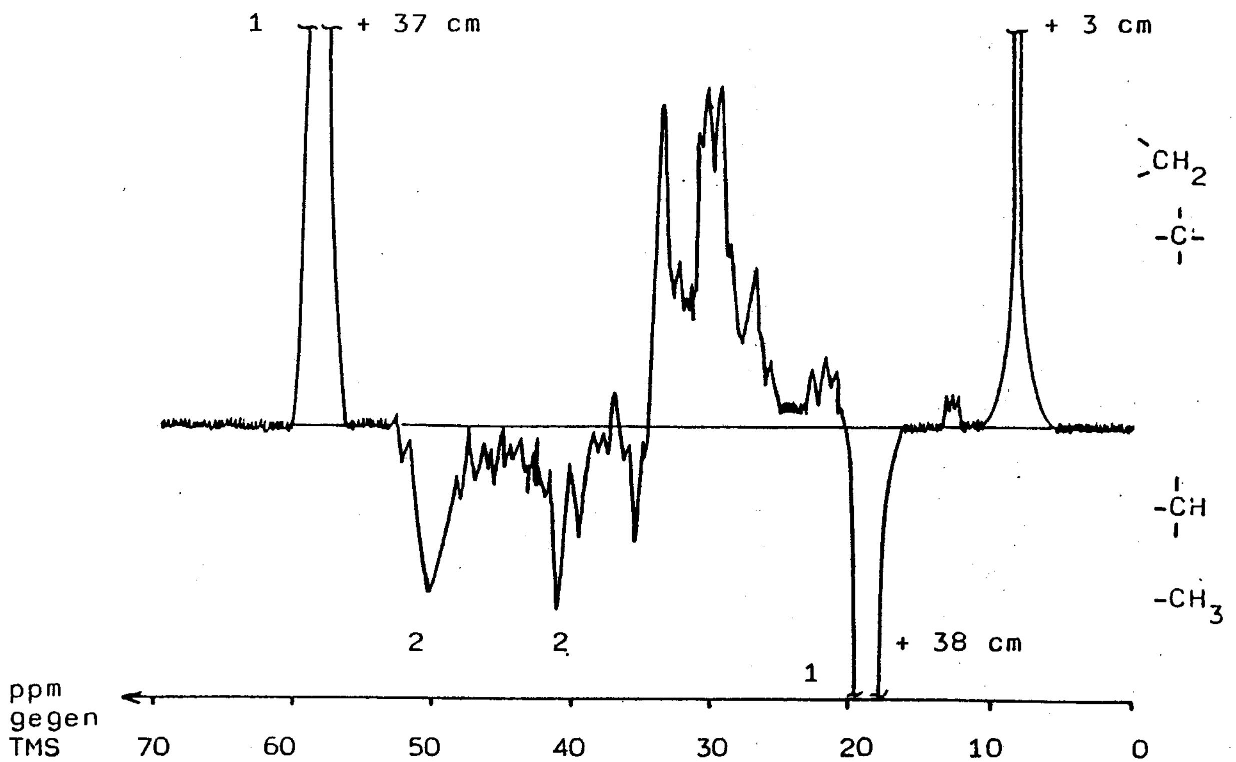


1 ... Triethoxysilylgruppen

2 ... Sulfid- und Polysulfidgruppen am Cyclohexan-Ring

Bild 2: $^{13}C$-NMR-Spektrum (APT) des erfindungsgemäßen S-haltigen Silans entsprechend Ausführungsbeispiel 7

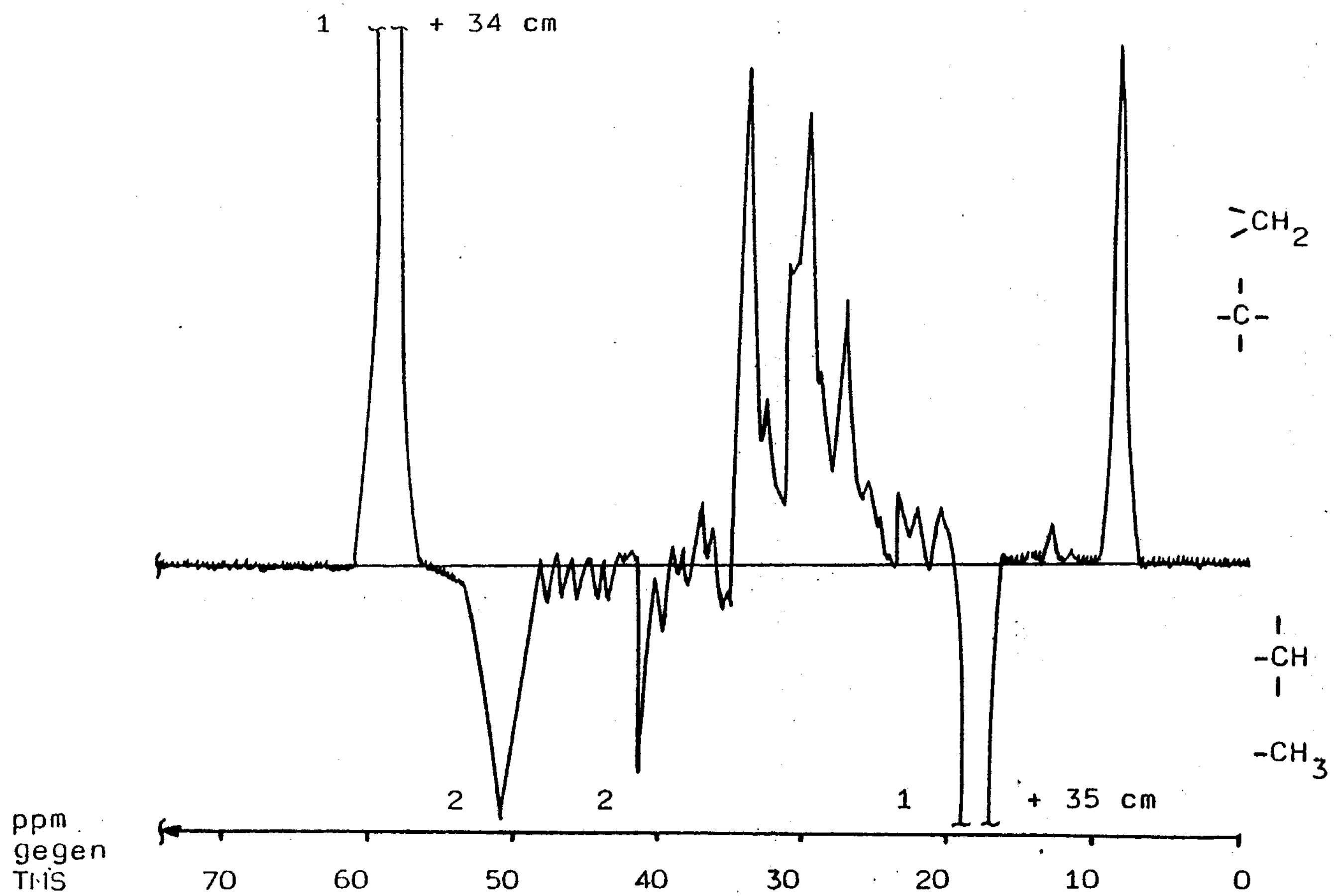


1 ... Triethoxysilylgruppen

2 ... Sulfid- und Polysulfidgruppen am Cyclohexan-Ring